# EUROPEAN PATENT APPLICATION

(11) **EP 1 983 661 A1**
(43) Date of publication of application: **22.10.2008**
(21) Application number: 07007701.1
(22) Date of filing: 16.04.2007
(51) Int. Cl.: H04B 7/08, H04B 7/10

(54) **Wireless transmission system having architecture based on three internal antennas and method thereof**

(71) Applicant: Sercomm Corporation, Nangkang T'ai pei 115 (TW)
(72) Inventor: Chen, Chien-Ming, Chiayi City 600 (TW); Chiang, Meng-Chien, Sijhih City, Tapei County 221 (TW)
(74) Representative: Manasse, Uwe

(57) **Abstract**

A wireless transmission system is provided for receiving a wireless signal in a wireless electronic device. The wireless transmission system includes a first antenna for vertical polarization, a second antenna for horizontal polarization, a sensor module for sensing pose status of the wireless electronic device and generating a control signal, and a controllable switch coupled to the first antenna and the second antenna for selecting one of the first antenna and the second antenna as an active antenna for receiving the wireless signal according to the control signal. With the aid of the two antennas, signal that comes from any direction can be received efficiently. Furthermore, one omni-directional antenna is used for transmitting signal. All the antennas are internal, and have better throughput performance than external antennas.

## Description

### BACKGROUND OF THE INVENTION

### 1. Field of the Invention

The present invention relates in general to a wireless transmission system and, more particularly, to a wireless transmission system having architecture based on three internal antennas that can have better communication range than external antenna.

### 2. Description of the Prior Art

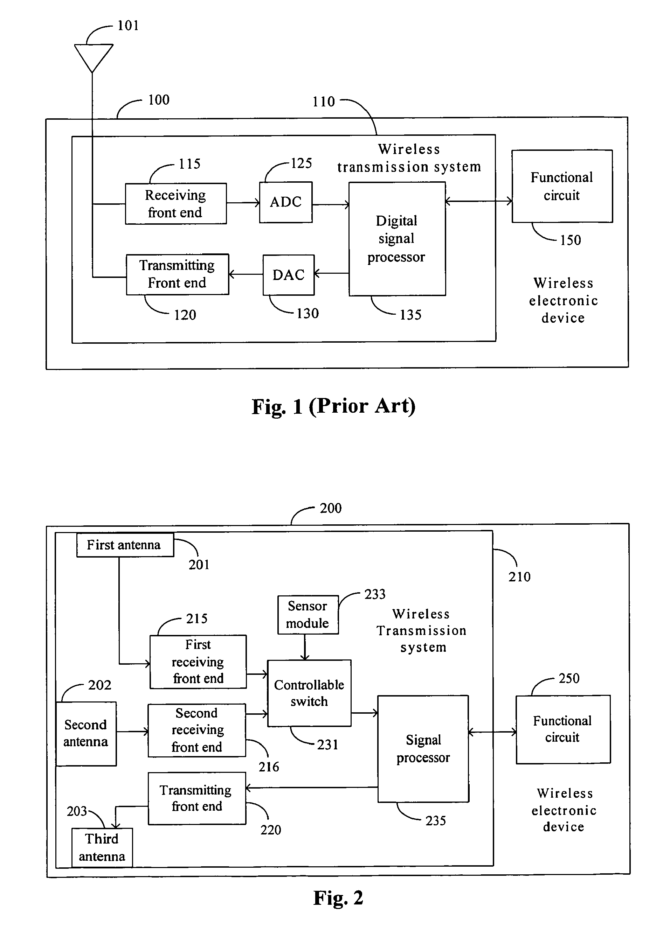

Please refer to Fig. 1. Fig. 1 shows a schematic functional block diagram illustrating a wireless transmission system 110 installed in a wireless electronic device 100 according to a prior art. The wireless electronic device 100 comprises an antenna 101, a wireless transmission system 110, and a functional circuit 150.

The functional circuit 150 is utilized to process functional operations, such as broadband signal processing, printing, routing, print serving, etc., of the wireless electronic device 100. The prior-art antenna 101 is usually an external antenna such as an antenna dipole with stretchable design and being capable of rotating for pointing toward a certain direction. The wireless transmission system 110 comprises a receiving front end 115, a transmitting front end 120, an analog-to-digital converter 125, a digital-to-analog converter 130, and a digital signal processor 135.

The receiving front end 115 functions to amplify and demodulate a wireless signal received from the antenna 101 for generating an internal received signal. The analog-to-digital converter 125 functions to convert the internal received signal in analog form generated by the receiving front end 115 into an internal received signal in digital form. The digital signal processor 135 processes the internal received signal in digital form for providing a received functional signal to the functional circuit 150.

Furthermore, the digital signal processor 135 processes a transmitting functional signal provided by the functional circuit 150 for generating a transmitting signal in digital form. The digital-to-analog converter 130 converts the transmitting signal in digital form into a transmitting signal in analog form. The transmitting front end 120 functions to modulate and amplify the transmitting signal in analog form for generating a wireless transmitting signal to be transmitted by the antenna 101.

It is well known that the wireless transmission signal is carried in an electromagnetic wave, and the electromagnetic wave is actually polarized. Accordingly, a wide-used antenna dipole is able to receive a polarized wireless signal efficiently only when the polarization is the same as the transmitting antenna. However, rotating of the antenna dipole for pointing toward a best direction for wireless signal receiving is usually performed manually, which is inconvenient to end users. The situation is even worse when the wireless electronic device is moveable and can be placed in different pose status, which means that orientation of the antenna dipole of the wireless electronic device is adjusted manually each time when the wireless electronic device is moved or changes pose status.

For that reason, there is a big need for providing a low-power wireless transmission system having high performance of wireless signal receiving to solve the aforementioned problems.

### SUMMARY OF THE INVENTION

It is therefore a primary objective of the present invention to provide a low-power wireless transmission system having high performance of wireless signal receiving to solve the prior art problems.

In accordance with an objective of the present invention, a wireless transmission system for used in a wireless electronic device is provided for achieving high performance of wireless signal receiving. The wireless transmission system comprises: a first antenna for receiving a first wireless receiving signal in a first polarized direction (vertical); a second antenna for receiving a second wireless receiving signal in a second polarized direction (horizontal) ; a sensor module for sensing pose status of the wireless electronic device and generating a control signal; and a controllable switch, coupled to the first antenna and the second antenna, for selecting a best wireless receiving signal out of the first wireless receiving signal and the second wireless receiving signal as an active signal to be processed by the wireless electronic device.

The present invention further provides a wireless transmission method for receiving a wireless signal in a wireless electronic device. The wireless transmission method comprises: installing a first antenna and a second antenna in the wireless electronic device; receiving a first wireless signal from the first antenna and a second wireless signal from the second antenna; amplifying and demodulating the first wireless signal by a first receiving front end and the second wireless signal by a second receiving front end for generating a first internal signal and a second internal signal respectively; sensing pose status of the wireless electronic device by a pose sensor for generating a control signal; and selecting one of the first internal signal and the second internal signal as an active internal signal to be processed by the wireless electronic device according to the control signal.

Moreover, the present invention provides a wireless transmission method for receiving a wireless signal in a wireless electronic device. The wireless transmission method comprises: installing a plurality of antennas in a wireless electronic device; receiving a plurality of wireless signals from the plurality of antennas; amplifying and demodulating the plurality of wireless signals by a plurality of receiving front ends for generating a plurality of internal signals respectively; sensing pose status of the wireless electronic device by a pose sensor for generating a control signal; and selecting one of the plurality of internal signals as an active internal signal to be processed by the wireless electronic device according to the control signal.

These and other objectives of the present invention will no doubt become obvious to those of ordinary skill in the art after reading the following detailed description of the preferred embodiment that is illustrated in the various figures and drawings.

### BRIEF DESCRIPTION OF THE DRAWINGS

The above and other objects and features of the present invention will become apparent from the subsequent description of preferred embodiments given in conjunction with the following accompanying drawings.
- Fig.: 1 shows a schematic functional block diagram illustrating a wireless transmission system installed in a wireless electronic device according to a prior art.
- Fig.: 2 sets forth a schematic functional block diagram illustrating a wireless transmission system installed in a wireless electronic device according to the present invention.
- Fig.: 3 presents a schematic functional block diagram illustrating a wireless transmission system installed in a wireless electronic device in accordance with a first preferred embodiment of the present invention.
- Fig.: 4 presents a schematic functional block diagram illustrating a wireless transmission system installed in a wireless electronic device in accordance with a second preferred embodiment of the present invention.
- Fig.: 5 shows a flowchart depicting a wireless transmission method according to the present invention.
- Fig.: 6 shows a flowchart depicting another wireless transmission method according to the present invention.

### DETAILED DESCRIPTION OF THE PREFERRED EMBODIMENT

Hereinafter, preferred embodiments according to the present invention will be described in detail with reference to the accompanying drawings. Here, it is to be noted that the present invention is not limited thereto.

Please refer to Fig. 2. Fig. 2 sets forth a schematic functional block diagram illustrating a wireless transmission system 210 installed in a wireless electronic device 200 according to the present invention. The wireless electronic device 200 can be a personal computer, a digital camera, a gateway, a router, a gateway router, a print server, etc. The wireless electronic device 200 comprises a wireless transmission system 210 and a functional circuit 250.

The functional circuit 250 is utilized to process functional operations, such as image processing, printing, routing, etc., of the wireless electronic device 200.

The wireless transmission system 210 comprises a first antenna 201, a second antenna 202, a third antenna 203, a first receiving front end 215, a second receiving front end 216, a transmitting front end 220, a controllable switch 231, a sensor module 233, and a signal processor 235. The first antenna 201 and the second antenna 202 are arranged to efficiently receive wireless signals in different polarized directions. Furthermore, the first antenna 201 and the second antenna 202 are both internal antennas such as internal printed or flat antennas oriented in different directions. The polarized direction of the second antenna can be perpendicular to the polarized direction of the first antenna. The third antenna 203 is utilized to transmit wireless signals and is also an internal antenna. Therefore, there is no external antenna stretching outside the wireless electronic device 200, which results in a generic pleasant structure of the wireless electronic device 200.

The first receiving front end 215 is coupled to the first antenna 201 and functions to amplify and demodulate a first received signal received from the first antenna 201 so as to generate a first internal received signal. The second receiving front end 216 is coupled to the second antenna 202 and functions to amplify and demodulate a second received signal received from the second antenna 202 so as to generate a second internal received signal.

The sensor module 203 functions to sense the pose status of the wireless electronic device 250 and generates a control signal according to the sensed pose status. The controllable switch 231 is utilized to select one of the first internal received signal and the second internal received signal so as to transfer the selected internal received signal to the signal processor 235 according to the control signal from the sensor module 233. The controllable switch 231 can be a multiplexer, an electronic relay, or a mechanical relay. The control signal is generated for selecting an optimal internal received signal from the most efficient antenna on the pose status.

For instance, the controllable switch 231 may transfer the first internal received signal to the signal processor 235 when the wireless electronic device 200 is placed in a horizontal pose status, and the controllable switch 231 may transfer the second internal received signal to the signal processor 235 when the wireless electronic device 200 is placed in a vertical pose status.

The signal processor 235 processes the selected internal received signal for providing a received functional signal to the functional circuit 250. Furthermore, the signal processor 235 processes a transmitting functional signal provided by the functional circuit 250 for generating an internal transmitting signal. The transmitting front end 220 functions to modulate and amplify the internal transmitting signal so as to generate a transmitting signal to be transmitted by the third antenna 203.

Based on the above description, the wireless transmission system 210 is able to automatically select one of the first antenna and the second antenna as an active antenna for high-efficient wireless signal receiving. As a result, the wireless electronic device 200 is able to perform a high-efficiency wireless signal receiving operation regardless of the pose status of the wireless electronic device 200. Please note that the aforementioned wireless transmission system is able to modify effortlessly for more than two receiving antennas having different polarized directions, which is still within the scope of the present invention.

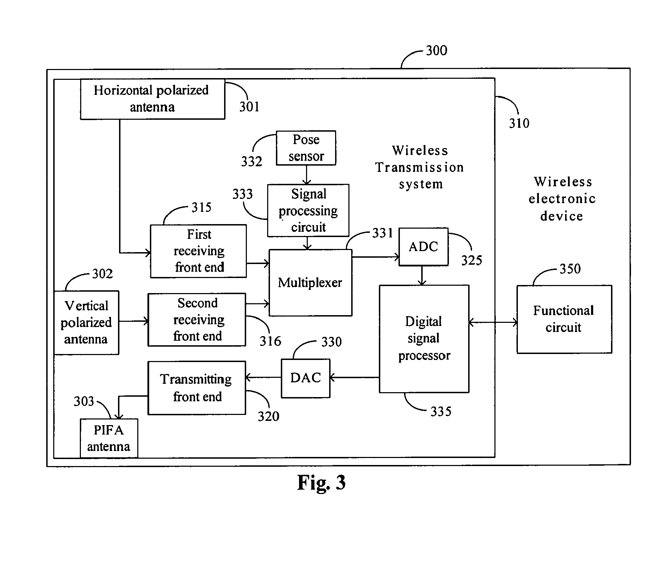

Please refer to Fig. 3. Fig. 3 presents a schematic functional block diagram illustrating a wireless transmission system 310 installed in a wireless electronic device 300 in accordance with a first preferred embodiment of the present invention. The wireless electronic device 300 comprises a wireless transmission system 310 and a functional circuit 350.

The functional circuit 350 is utilized to process functional operations, such as image processing, printing, routing, etc. , of the wireless electronic device 300.

The wireless transmission system 310 comprises a horizontal polarized antenna 301, a vertical polarized antenna 302, a Planar Inverted F antenna (PIFA) 203, a first receiving front end 315, a second receiving front end 316, a transmitting front end 320, a multiplexer 331, a pose sensor 332, a signal processing circuit 333, an analog-to-digital converter 325, a digital-to-analog converter 330, and a digital signal processor 335.

The horizontal polarized antenna 301 is arranged to efficiently receive wireless signals in horizontal polarized direction. The vertical polarized antenna 302 is arranged to efficiently receive wireless signals in vertical polarized direction. The horizontal polarized antenna 301 and the vertical polarized antenna 302 are both internal antennas such as internal printed or flat antennas oriented in horizontal and vertical directions respectively.

The PIFA antenna 303 is utilized to transmit wireless signals and is also an internal antenna. Therefore, there is still no external antenna stretching outside the wireless electronic device 300, which results in a generic pleasant structure of the wireless electronic device 300.

The first receiving front end 315 is coupled to the horizontal polarized antenna 301 and functions to amplify and demodulate a first received signal received from the horizontal polarized antenna 301 so as to generate a first internal received signal. The second receiving front end 316 is coupled to the vertical polarized antenna 302 and functions to amplify and demodulate a second received signal received from the vertical polarized antenna 202 so as to generate a second internal received signal.

The pose sensor 332 functions to sense the pose status of the wireless electronic device 350 and generates a sensing signal. The pose sensor 332 can be a signal processing unit that performs the calculation for generating the sensing signal. The signal processing circuit 333 processes the sensing signal for generating a control signal. The multiplexer 331 is utilized to select one of the first internal received signal and the second internal received signal as an active internal received signal according to the control signal. The control signal is generated for selecting an optimal internal received signal from the most efficient antenna on the pose status.

For instance, the multiplexer 331 may transfer the first internal received signal to the digital signal processor 335 when the wireless electronic device 300 is placed in a horizontal pose status, and the multiplexer 331 may transfer the second internal received signal to the digital signal processor 335 when the wireless electronic device 300 is placed in a vertical pose status.

The active internal received signal is converted into a digital received signal by the analog-to-digital converter 325. The digital signal processor 335 processes the digital received signal for providing a digital received functional signal to the functional circuit 350. Furthermore, the digital signal processor 335 processes a digital transmitting functional signal provided by the functional circuit 350 for generating a digital internal transmitting signal. The digital-to-analog converter 330 converts the digital internal transmitting signal into an analog internal transmitting signal. The transmitting front end 320 functions to modulate and amplify the analog internal transmitting signal so as to generate a transmitting signal to be transmitted by the PIFA antenna 303.

Based on the above description, the wireless transmission system 310 is able to automatically select one of the horizontal polarized antenna and the vertical polarized antenna as an active antenna for high-efficient wireless signal receiving. As a result, the wireless electronic device 300 is able to perform a high-efficiency wireless signal receiving operation regardless of the pose status of the wireless electronic device 300.

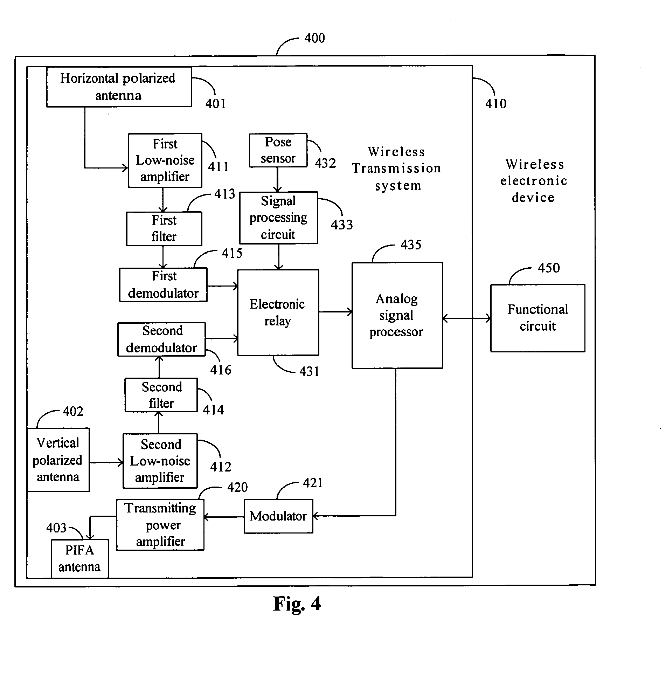

Please refer to Fig. 4. Fig. 4 presents a schematic functional block diagram illustrating a wireless transmission system 410 installed in a wireless electronic device 400 in accordance with a second preferred embodiment of the present invention. The wireless electronic device 400 comprises a wireless transmission system 410 and a functional circuit 450.

The functional circuit 450 is utilized to process functional operations, such as image processing, printing, routing, etc. , of the wireless electronic device 400.

The wireless transmission system 410 comprises a horizontal polarized antenna 401, a vertical polarized antenna 402, a Planar Inverted F antenna (PIFA) 403, a first low-noise amplifier 411, a first filter 413, a first demodulator 415, a second low-noise amplifier 412, a second filter 414, a second demodulator 416, a transmitting power amplifier 420, a modulator 421, an electronic relay 431, a pose sensor 432, a signal processing circuit 433, and an analog signal processor 435.

The horizontal polarized antenna 401 is arranged to efficiently receive wireless signals in horizontal polarized direction. The vertical polarized antenna 402 is arranged to efficiently receive wireless signals in vertical polarized direction. The horizontal polarized antenna 401 and the vertical polarized antenna 402 are both internal antennas such as internal printed or flat antennas oriented in horizontal and vertical directions respectively.

The PIFA antenna 403 is utilized to transmit wireless signals and is also an internal antenna. Therefore, there is still no external antenna stretching outside the wireless electronic device 400, which results in a generic pleasant structure of the wireless electronic device 400.

The first low-noise amplifier 411 is coupled to the horizontal polarized antenna 401 and functions to amplify a first received signal received from the horizontal polarized antenna 401 so as to generate a first amplified signal. The first filter 413 performs filtering process on the first amplified signal for extracting desired band signal to generate a first filtered signal. The first demodulator 415 performs demodulating process on the first filtered signal to generate a first internal received signal.

The second low-noise amplifier 412 is coupled to the vertical polarized antenna 402 and functions to amplify a second received signal received from the vertical polarized antenna 402 so as to generate a second amplified signal. The second filter 414 performs filtering process on the second amplified signal for extracting desired band signal to generate a second filtered signal. The second demodulator 416 performs demodulating process on the second filtered signal to generate a second internal received signal.

The pose sensor 432 functions to sense the pose status of the wireless electronic device 450 and generates a sensing signal. The signal processing circuit 433 processes the sensing signal for generating a control signal. The electronic relay 431 is utilized to select one of the first internal received signal and the second internal received signal as an active internal received signal according to the control signal. The control signal is generated for selecting an optimal internal received signal from the most efficient antenna on the pose status.

For instance, the electronic relay 431 may transfer the first internal received signal to the analog signal processor 435 when the wireless electronic device 400 is placed in a horizontal pose status, and the electronic relay 431 may transfer the second internal received signal to the analog signal processor 435 when the wireless electronic device 400 is placed in a vertical pose status.

The analog signal processor 435 processes the active internal received signal for providing a received functional signal to the functional circuit 450. Furthermore, the analog signal processor 435 processes a transmitting functional signal provided by the functional circuit 450 for generating an internal transmitting signal. The modulator 421 performs modulating process on the internal transmitting signal to generate a modulated transmitting signal. The transmitting power amplifier 420 functions to amplify the modulated transmitting signal so as to generate a transmitting signal to be transmitted by the PIFA antenna 403.

Based on the above description, the wireless transmission system 410 is able to automatically select one of the horizontal polarized antenna and the vertical polarized antenna as an active antenna for high-efficient wireless signal receiving. As a result, the wireless electronic device 400 is able to perform a high-efficiency wireless signal receiving operation regardless of the pose status of the wireless electronic device 400.

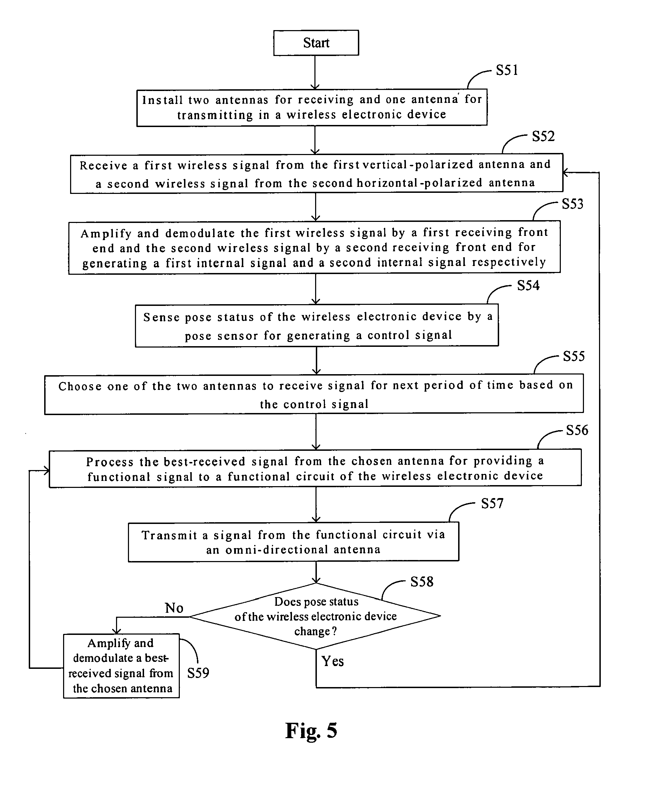

Please refer to Fig. 5. Fig. 5 shows a flowchart depicting a wireless transmission method according to the present invention. The transmission method in Fig. 5 comprises the following steps:
- Step S51:: installing two antennas for receiving and one antenna for transmitting in a wireless electronic device;
- Step S52:: receiving a first wireless signal from the first vertical-polarized antenna and a second wireless signal from the second horizontal-polarized antenna;
- Step S53:: amplifying and demodulating the first wireless signal by a first receiving front end and the second wireless signal by a second receiving front end for generating a first internal signal and a second internal signal respectively;
- Step S54:: sensing pose status of the wireless electronic device by a pose sensor for generating a control signal;
- Step S55:: choosing one of the two antennas to receive signal for next period of time based on the control signal;
- Step S56:: processing the best-received signal from the chosen antenna for providing a functional signal to a functional circuit of the wireless electronic device;
- Step S57:: transmitting a signal from the functional circuit of the wireless electronic device via an omni-directional antenna;
- Step S58 :: Detecting whether or not pose status of the wireless electronic device changes, if pose status of the wireless electronic device changes, then go to step S52, otherwise go to step S59; and
- Step S59:: amplifying and demodulating a best-received signal from the chosen antenna, go to step S56.

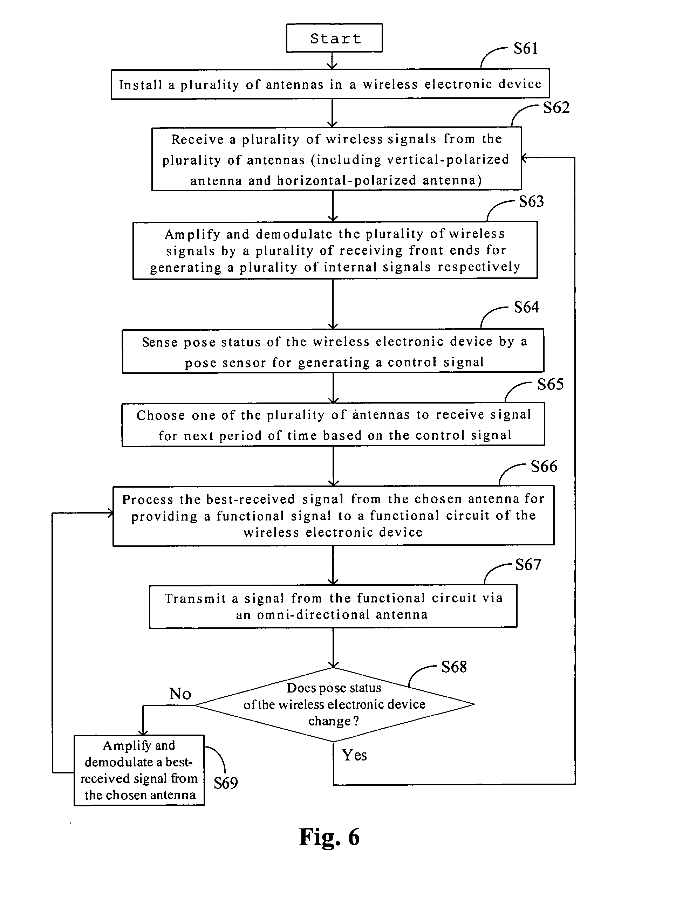

Please refer to Fig. 6. Fig. 6 shows a flowchart depicting another wireless transmission method according to the present invention. The transmission method in Fig. 6 comprises the following steps:
- Step S61:: installing a plurality of antennas in a wireless electronic device;
- Step S62:: receiving a plurality of wireless signals from the plurality of antenna (including vertical-polarized antenna and horizontal-polarized antenna);
- Step S63:: amplifying and demodulating the plurality of wireless signals by a plurality of receiving front ends for generating a plurality of internal signals respectively;
- Step S64:: sensing pose status of the wireless electronic device by a pose sensor for generating a control signal;
- Step S65 :: choosing one of the plurality of antennas to receive signal for next period of time based on the control signal;
- Step S66:: processing the best-received signal from the chosen antenna for providing a functional signal to a functional circuit of the wireless electronic device;
- Step S67:: transmitting a signal from the functional circuit of the wireless electronic device via an omni-directional antenna;
- Step S68 :: Detecting whether or not pose status of the wireless electronic device changes, if pose status of the wireless electronic device changes, then go to step S62, otherwise go to step S69; and
- Step S69:: amplifying and demodulating a best-received signal from the chosen antenna, go to step S66.

The features in the foregoing description, in the claims and/or in the accompanying drawings may, both and in any combination thereof, be material for realising the invention in diverse forms thereof.

While the invention has been shown and described with respect to the preferred embodiments of the present invention, it will be understood by those skilled in the art that various changes and modifications may be made without departing from the spirit and scope of the invention as defined in the following claims.

The features in the foregoing description, in the claims and/or in the accompanying drawings may, both and in any combination thereof, be material for realising the invention in diverse forms thereof.

## Claims

1. A wireless transmission system for use in a wireless electronic device, the wireless transmission system comprising:
a first antenna for receiving a first wireless receiving signal in a first polarized direction (vertical);
a second antenna for receiving a second wireless receiving signal in a second polarized direction (horizontal);
a sensor module for sensing pose status of the wireless electronic device and generating a control signal; and
a controllable switch, coupled to the first antenna and the second antenna, for selecting one of the first wireless receiving signal and the second wireless receiving signal as an active signal to be processed by the wireless electronic device.

2. The wireless transmission system of claim 1, further comprising:
a first receiving front end, coupled between the first antenna and the controllable switch, for amplifying and demodulating the first wireless receiving signal; and
a second receiving front end, coupled between the second antenna and the controllable switch, for amplifying and demodulating the second wireless receiving signal.

3. The wireless transmission system of claim 2, wherein the first receiving front end comprises:
a first low-noise amplifier, coupled to the first antenna, for amplifying the first wireless receiving signal to generate an amplified first wireless receiving signal; and
a first demodulator, coupled to the first low-noise amplifier, for demodulating the amplified first wireless receiving signal to generate a first receiving signal.

4. The wireless transmission system of claim 3, wherein the first receiving front end further comprises a first filter, coupled between the first low-noise amplifier and the first demodulator, for performing filtering process on the amplified first wireless receiving signal to extract desired band signal.

5. The wireless transmission system of claim 2, wherein the second receiving front end comprises:
a second low-noise amplifier, coupled to the second antenna, for amplifying the second wireless receiving signal to generate an amplified second wireless receiving signal; and
a second demodulator, coupled to the second low-noise amplifier, for demodulating the amplified second wireless receiving signal to generate a second receiving signal.

6. The wireless transmission system of claim 5 wherein the second receiving front end further comprises a second filter, coupled between the second low-noise amplifier and the second demodulator, for performing filtering process on the amplified second wireless receiving signal to extract desired band signal.

7. The wireless transmission system of claim 1, further comprising an analog-to-digital converter, coupled to the controllable switch for converting the active signal in analog form into an active signal in digital form.

8. The wireless transmission system of claim 1, wherein the sensor module comprises:
a pose sensor for sensing pose status of the wireless electronic device and generating a sensing signal; and
a signal processing circuit, coupled between the pose sensor and the controllable switch, for processing the sensing signal to generate the control signal.

9. The wireless transmission system of claim 8, wherein the pose sensor is a signal processing unit that performs the calculation for generating the sensing signal.

10. The wireless transmission system of claim 1, wherein the first antenna and the second antenna are internal printed or flat antennas.

11. The wireless transmission system of claim 1, wherein the controllable switch is a multiplexer.

12. The wireless transmission system of claim 1, wherein the controllable switch is an electronic relay.

13. The wireless transmission system of claim 1, further comprising a third antenna for transmitting a wireless signal.

14. The wireless transmission system of claim 13, further comprising a transmitting front end, coupled to the third antenna, for modulating and amplifying a transmitting signal to generate a wireless transmitting signal.

15. The wireless transmission system of claim 14, wherein the transmitting front end comprises:
a modulator for modulating the transmitting signal to the wireless transmitting signal; and
a transmitting power amplifier, coupled between the modulator and the third antenna, for amplifying the wireless transmitting signal.

16. The wireless transmission system of claim 14, further comprising a digital-to-analog converter, coupled to the transmitting front end, for converting a transmitting signal in digital form into a transmitting signal in analog form.

17. The wireless transmission system of claim 1, wherein the second polarized direction of the second antenna is perpendicular to the first polarized direction of the first antenna.

18. A wireless transmission method for receiving a wireless signal in a wireless electronic device, the wireless transmission method comprising:
installing a first internal antenna and a second internal antenna in the wireless electronic device;
receiving a first wireless signal from the first internal antenna and a second wireless signal from the second internal antenna;
amplifying and demodulating the first wireless signal by a first receiving front end and the second wireless signal by a second receiving front end for generating a first internal signal and a second internal signal respectively;
sensing pose status of the wireless electronic device by a pose sensor for generating a control signal; and
selecting one of the first internal signal and the second internal signal as an active internal signal to be processed by the wireless electronic device according to the control signal.

19. The wireless transmission method of claim 18, further comprising:
performing filtering process on the first wireless signal and the second wireless signal by the first receiving front end and the second receiving front end respectively.

20. A wireless transmission method for receiving a wireless signal in a wireless electronic device, the wireless transmission method comprising:
installing a plurality of internal antennas in a wireless electronic device;
receiving a plurality of wireless signals from the plurality of internal antennas;
amplifying and demodulating the plurality of wireless signals by a plurality of receiving front ends for generating a plurality of internal signals respectively;
sensing pose status of the wireless electronic device by a pose sensor for generating a control signal; and
selecting one of the plurality of internal signals as an active internal signal to be processed by the wireless electronic device according to the control signal.
